# EUROPEAN PATENT SPECIFICATION

(11) **EP 0 647 770 B1**
(45) Date of publication and mention of the grant of the patent: **09.04.1997**
(21) Application number: 94120028.9
(22) Date of filing: 04.06.1992
(51) Int. Cl.: F01L 9/02, F02D 13/02

(54) **Hydraulically operated valve control system for an internal combustion engine**
Hydraulische Ventilsteuervorrichtung für eine Brennkraftmaschine
Dispositif de commande hydraulique de soupapes pour un moteur à combustion interne

(30) Priority: 24.06.1991 US 720115
(43) Date of publication of application: 12.04.1995
(62) Divisional of application: 92305111.4
(73) Proprietor: FORD MOTOR COMPANY LIMITED, Brentwood, Essex CM13 3BW (GB); Ford-Werke Aktiengesellschaft, 50735 Köln (DE); FORD FRANCE S. A., 92506 Rueil-Malmaison Cédex (FR)
(72) Inventor: Schechter, Michael Moses, Southfield, Michigan 48076 (US)
(74) Representative: Messulam, Alec Moses

(56) References cited:
- EP-A- 0 264 706
- EP-A- 0 420 443
- FR-A- 2 610 993

## Description

This invention relates to systems for variably controlling internal combustion engine intake and exhaust valves. More specifically, it relates to engine valve systems of the type in which hydraulic pressure of a pressurised fluid is used through action of solenoid valves to control the engine valves motion.

The enhancement of engine performance to be attained by being able to vary the acceleration, velocity and travel time of the intake and exhaust valves in an engine is well known and appreciated in the art. However, the technology for providing a straight-forward, relatively inexpensive and highly reliable system has not been forthcoming. Increased use and reliance on micro electronic control systems for automotive vehicles and increased confidence in hydraulic as opposed to mechanical systems is now making substantial progress possible. In the area of intake and exhaust engine valves, prior development has been largely dependent upon sophisticated mechanical systems such as mechanically varying phase shift and other aspects of valve timing. increased use of multiple valve engines has also been promoted.

The use or adoption of hydraulically controlled engine valves has been quite slow. Examples of known systems include those as shown in U.S. Patent Nos. 2,915,052; 3,240,191; 3,361,121; 3,534,718; 3,926,159; 3,963,006; and 4,200,067. In some instances, such as shown in U.S. Patent No. 3,361,121 the poppet valve is maintained in a closed position by a mechanical coil spring, yet utilises a hydraulic actuator to bias the valves in the open position. Several of the aforementioned patents also disclose the use of a rotary distributor valve to alternately couple the hydraulic actuator ports to a source of pressurised fluid, such as shown in U.S. Patent Nos. 2,915,052 and 4,200,067. In certain of the aforementioned patents, it is also shown that the hydraulic fluid system is used to both open and close the engine valve, such feature being shown in U.S. Patent Nos. 2,915,052 and 3,963,006.

However, none of the aforementioned systems provide a variable engine valve control system offering the simplicity, reliability, flexibility and efficiency believed necessary for use in the high production, high performance automotive engines being produced today and those that will be required in the near future.

The Applicants have earlier proposed in EP-A-420 443 an engine valve control system of an internal combustion engine in which the valve stroke is controlled by varying timing and duration of electric signals sent to individually dedicated engine valve controlling means, the system comprising a controller programmed to send variable electric control signals to the said engine valve controlling means for generating a signal duration determined by the controller as a function of engine operating conditions and being equal for all engine intake valves and equal for all engine exhaust valves.

EP-A-264 706 recognises the problem that there can exist fluctuations in solenoid operation delays and proposes compensating for such variations.

According to the present invention, there is provided an engine valve control system of an internal combustion engine as hereinafter set forth in Claim 1 of the appended claims.

The engine valve controlling means may suitably be an hydraulic system as described below and as claimed in copending EP-A-520 633. In this system, sources of high and low pressure are connected by solenoid operated valves to a double acting piston acting to open and close each engine valve. Selective actuation and deactuation of the controlling means causes an inflow of pressurised fluid into a space at one end of said piston and an outflow of fluid from the space at the other end of the piston, such action leading to a change in the balance of forces acting on the piston and causing controlled motion of the valve from one fixed position to another.

The invention will now be described further, by way of example, with reference to the accompanying drawings, in which :
Figure 1 is a schematic diagram showing a single hydraulically controlled engine valve and the entire hydraulic system for supplying fluid to the valve controlling means according to the invention;
Figures 2a, 2b and 2c are elevation views showing a single engine valve and associated valve controlling means, with the valve being shown in three different stages of its being fully opened; and
Figures 3a, 3b and 3c are elevation views showing a single engine valve and associated valve controlling means, with the valve being shown in three different stages of its being fully closed.
Figure 4 is a schematic diagram of a conventional lost motion type, cam-operated, hydraulic engine valve control system;
Figure 5 is a composite graph showing the operating characteristics of a single solenoid valve as a function of time versus solenoid valve travel, current and voltage;
Figure 6 is a schematic diagram of yet another embodiment of the present invention wherein each solenoid valve used in the above-mentioned systems can be calibrated to allow adjusting the current input to the solenoid valve to produce an identical valve stroke for all of the variably hydraulically controlled valves in a system in accordance with the present invention as equipped with different solenoids; and
Figure 7 is a schematic diagram of a control system utilising a plurality of calibrated solenoid valves and adjusting the valve opening characteristics in each of the cylinders of the internal combustion engine in accordance with the present invention.

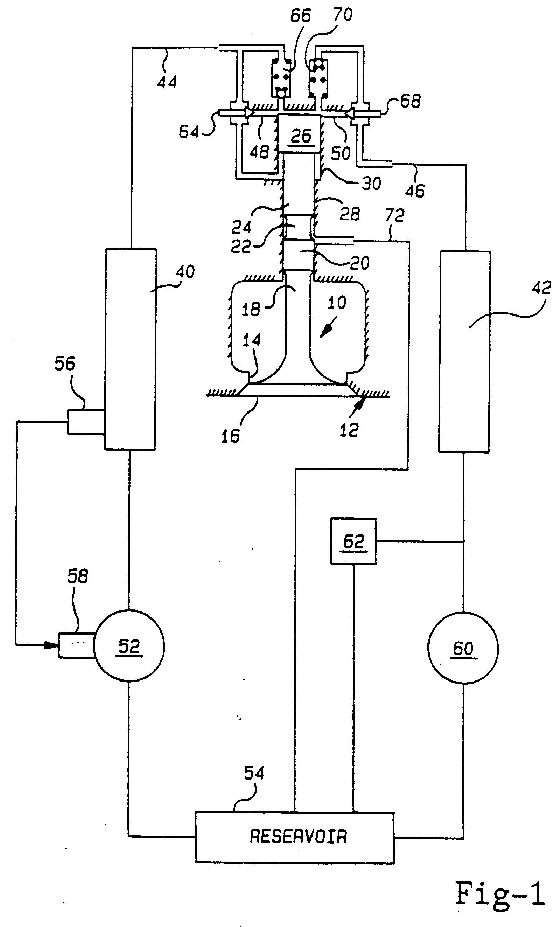

A system that provides variable control of engine valve timing, lift and velocity is illustrated in Figure 1. The system exploits elastic properties of compressed hydraulic fluid which, acting as a liquid spring, accelerates and decelerates the valve during its opening and closing motions. During acceleration, some of the potential energy of the fluid is converted into kinetic energy of the valve. During deceleration, the energy of the valve motion is returned to the fluid. With the exception of leakage, most of the energy of the fluid is conserved.

In Figure 1, an engine valve 10 is located within a cylinder head 12 which includes a port 14 for inlet air or exhaust, as the case may be. Valve 10 includes a valve head 16 and a stem portion 18. Valve stem portion 18 includes a series of concentric cylindrical sections 20, 22, 24 and 26 of varying outer diameter. The sections 20 and 24 guide the valve for reciprocation within guide bore 28. Section 26 constitutes a valve piston slidable within the limits of piston chamber 30 which is concentric with guide bore 28 and also constitutes a part of the cylinder head.

Fluid is selectively supplied to the piston 26 from a high pressure rail 40 and a low pressure rail 42 hydraulically connected through lines 44 and 46, respectively, to high pressure port 48 and low pressure port 50, respectively.

Hydraulic systems maintaining necessary fluid pressures in the high and low pressure rails can be arranged in a variety of ways. A variable displacement pump 52 is included between a reservoir 54 and the high pressure rail. Since the fluid in the high pressure rail is subject only to expansion and contraction, the pumping work of the pump is largely limited to that necessary to compensate for internal leakage through clearances. The variable displacement pump 52 may be under automatic control whereby a pressure sensor 56 will produce a pressure feedback signal to a pump controller 58 in the event pressure in the high pressure rail drops below the set minimum required at any particular vehicle speed or other operating condition. This then varies the pump displacement to maintain the required pressure in the high pressure rail. Fluid in the low pressure rail 42 is maintained at a fixed low pressure by means of pressure pump 60 supplying fluid from reservoir 54 and pressure regulator 62.

The volume above the piston 26 can be connected to the high pressure rail through a solenoid valve 64 or a check valve 66, or to the low pressure rail through solenoid valve 68 or a check valve 70. The volume below the piston 26 is always connected to the high pressure rail. Fluid return line 72 completes the system and provides the means for returning to the reservoir 54 any fluid which leaks past the piston 26 at either end to the chamber formed between guide bore 28 and the reduced diameter section 22 of the valve.

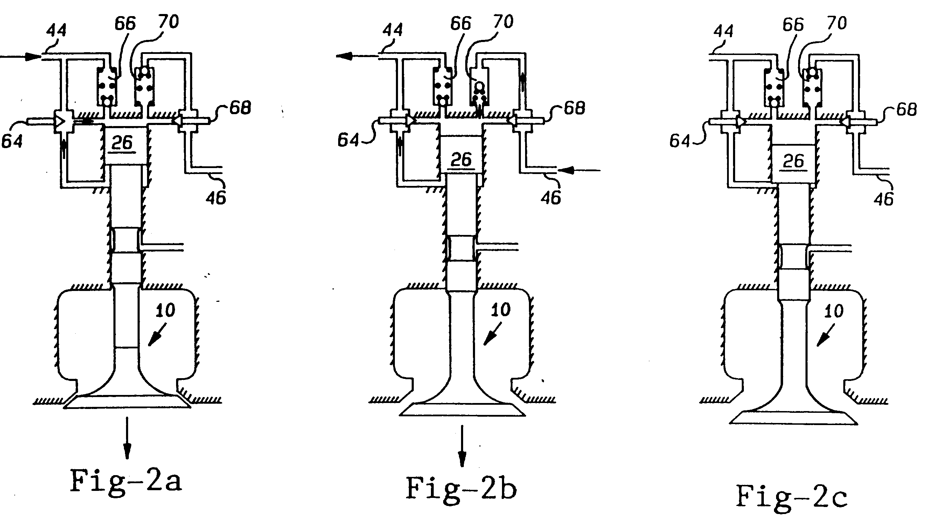

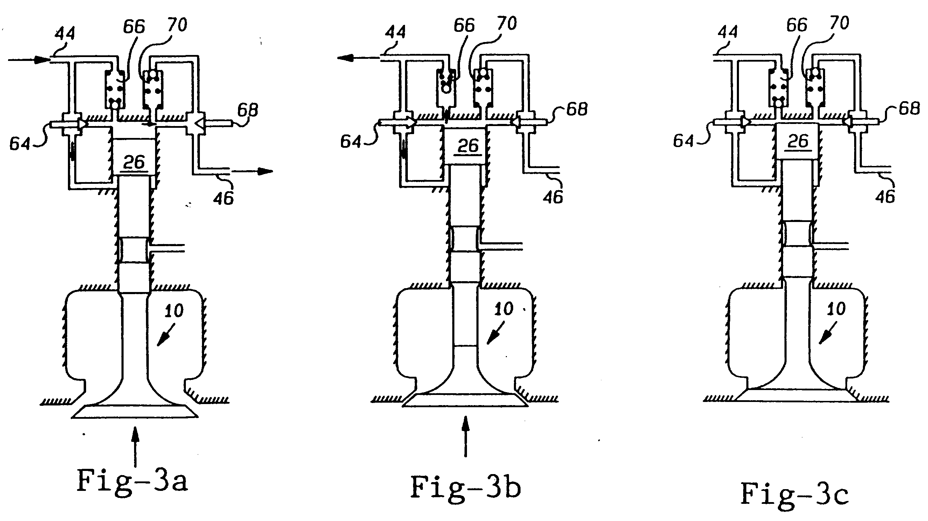

The process of a single valve 10 opening and closing is illustrated in Figures 2a-c and 3a-c. The arrows indicate the direction of fluid flow and valve motion as the case may be.

During the engine valve opening, the solenoid valve 64 opens and the net pressure force acting on the piston 26 accelerates the engine valve downward (Figure 2a). When the solenoid valve 64 closes, pressure above the piston 26 drops, and the piston decelerates pushing the fluid from the volume below it back into the high pressure rail (Figure 2b). Low pressure fluid flowing through the check valve 70 prevents void formation in the volume above the piston 26 during deceleration. When the downward motion of the valve stops, the low pressure check valve 70 closes and the engine valve remains locked in its open position (Figure 2c).

The process of engine valve closing is similar, in principle, to that of the valve opening. The solenoid valve 68 opens, pressure above the piston 26 drops and the net pressure force accelerates the engine valve upward (Figure 3a). Then the solenoid valve 68 closes and the rising pressure above the piston 26 opens the high pressure check valve 66 (Figure 3b). The direction of the net pressure force is reversed, and the engine valve decelerates pushing the fluid from the volume above the piston 26 back into the high pressure rail. When the engine valve exhausts its kinetic energy, the high pressure check valve 66 closes and the engine valve remains locked in its closed position (Figure 3c). A brief reopening of the solenoid valve 68 assures that the engine valve is firmly pressed against its seat.

Varying the timing of activation of the two solenoid valves varies the timing of the engine valve opening and closing. Valve lift can be controlled by varying the duration of the solenoid voltage pulse. Changing fluid pressure in the high pressure rail permits control of valve acceleration, velocity and travel time. All this permits considerably greater flexibility in engine valve operation control than is possible in conventional cam driven valve trains; flexibility which, in effect, is equivalent to ability to vary the size and the shape of the cam while the engine is running.

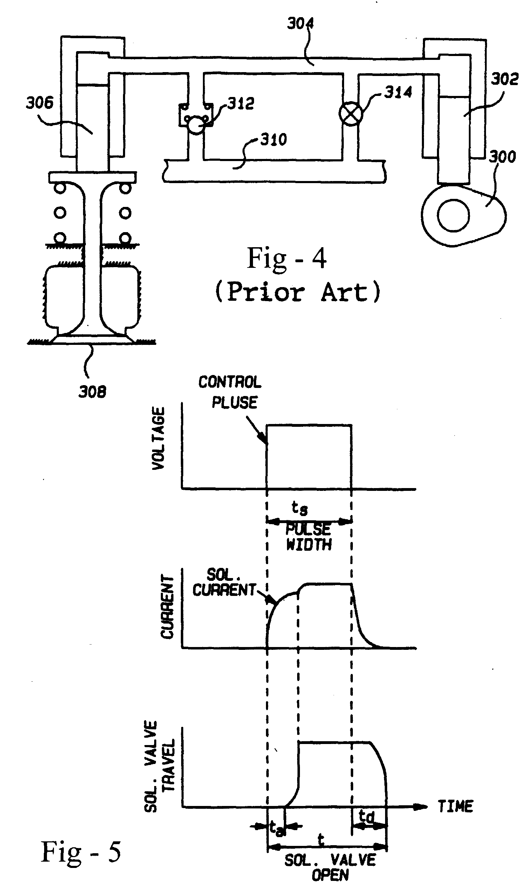

Valve motion control by means of solenoid type control valves is also used in variable valve systems known as "lost motion" systems. An example of a lost motion valve control system is diagrammatically shown in Figure 4. It is a well known system and as such forms no part of this invention.

A cam 300 drives a cam plunger 302. The motion of the plunger 302 is transmitted through fluid filling a passage 304 to a valve plunger 306 driving the valve 308. Fluid leaking out of the system is replenished from a supply gallery 310 through a check valve 312. As long as the solenoid valve 314 remains closed, the motion of the valve 308 is determined by the profile of the cam 300. Opening the solenoid valve 314 permits some of the fluid to escape from the passage 304 into the supply gallery 310. As a result, motion of the valve 308 becomes different from that dictated by the profile of the cam 300. By varying the solenoid voltage pulse timing and duration, various shapes of the valve lift versus time curve can be obtained.

One of the most important advantages of the variable valve control is the ability to control the amount of air inducted into the engine cylinders by controlling the valve operation rather than by means of throttling the air flow. This permits elimination of a substantial portion of engine throttling losses and improvement in the fuel efficiency. In addition to improved fuel efficiency, skilful application of variable valve control can lead to improvements in combustion stability, maximum power and exhaust emissions. It is important, however, to prevent cylinder-to-cylinder intake air maldistribution. In engines with carburettors or with single point central fuel injection, uneven intake air distribution would lead to unequal power developed by individual cylinders. in engines with multi-point port fuel injection or with direct in-cylinder injection, intake air maldistribution would result in cylinder-to-cylinder variations in air-to-fuel ratios. Such deficiencies can cancel out the benefits of variable valve control.

The amount of air inducted into an engine cylinder is dependent on the engine intake valve lift and opening duration. Therefore, to assure equal air distribution, it is imperative that the valve lift and duration of opening in all cylinders are the same. Since the motion of the valves is controlled by solenoid valves, this amounts to a requirement that all solenoid valves in the system, given the same signal, produce identical results in terms of valve motion.

The accuracy of the cylinder-to-cylinder air distribution is also affected by the accuracy of exhaust valve motion control. Therefore, in variable valve control systems controlling both intake and exhaust valves, similar requirements should be applied to both kinds of valves.

Referring to Figure 5, the normally closed solenoid valve parameter which determines the engine valve motion is the solenoid valve opening duration t. In systems using normally open solenoid valves it would be the closing duration. It is a function of the solenoid voltage pulse duration tₛ, but it differs from the latter by solenoid valve activation and deactivation delays, tₐ and t_{d}, respectively. This is illustrated in Figure 5 showing a graph of the solenoid voltage pulse versus time and corresponding graphs of the solenoid current and valve motion versus time. The activation and deactivation delays can vary from solenoid to solenoid due to differences associated with inevitable manufacturing tolerances. As a result, different solenoid valves receiving the same control voltage signal may exhibit different solenoid valve opening durations and, consequently, have different effects on the engine valve motion.

To ensure that the engine valve motion of all common valves (intake or exhaust) in all cylinders is identical, the solenoid valve opening duration in each solenoid must be the same. This is accomplished by modifying the duration of the voltage pulse sent to each individual solenoid, so as to compensate for variations in the activation and deactivation delays. The required correction in control pulse duration can be determined experimentally during solenoid testing and encoded on a tag attached to the solenoid valve. Subsequently, the information on the tag can be read and used by the engine electronic control system.

A conventional calibration device (not part of this invention) may be used to determine the correction required for individual solenoid valves. The device is intended for calibration of high pressure solenoid valves for a system such as illustrated in Figures 1-3. The calibration device would be connected to high and low fluid pressure sources. The device would need to include two solenoid valves. One of the two solenoid valves would be a permanent part of the device and have a verified standard characteristic. The other solenoid valve, e.g. the solenoid valve 64 shown in Figure 1, would be the one subject to testing.

During the test, both the solenoid valves in the calibration device are activated by voltage signals of a predetermined duration with some frequency, and the stroke of an engine valve forming a part of the calibration device and preferably identical to the engine valve 10 would be measured by a sensor. If the measured stroke differs from the expected standard one, the duration of the pulse applied to the solenoid valve 64 being calibrated is modified until the stroke of the engine valve corresponds to the required one. The final incremental value of the pulse duration added to or subtracted from the initial predetermined duration can be called the correction number of the solenoid valve. Different solenoid valves may have different correction numbers, but what is important is that if any of them is activated by a voltage pulse consisting of standard pulse duration, to which its individual correction number is added or subtracted, they will all produce the same valve lift. Since the correction number compensates for solenoid-to-solenoid variations in activation and deactivation delays, which do not vary with change in pulse duration and frequency, the correction determined under one set of conditions remains valid for any pulse duration and frequency.

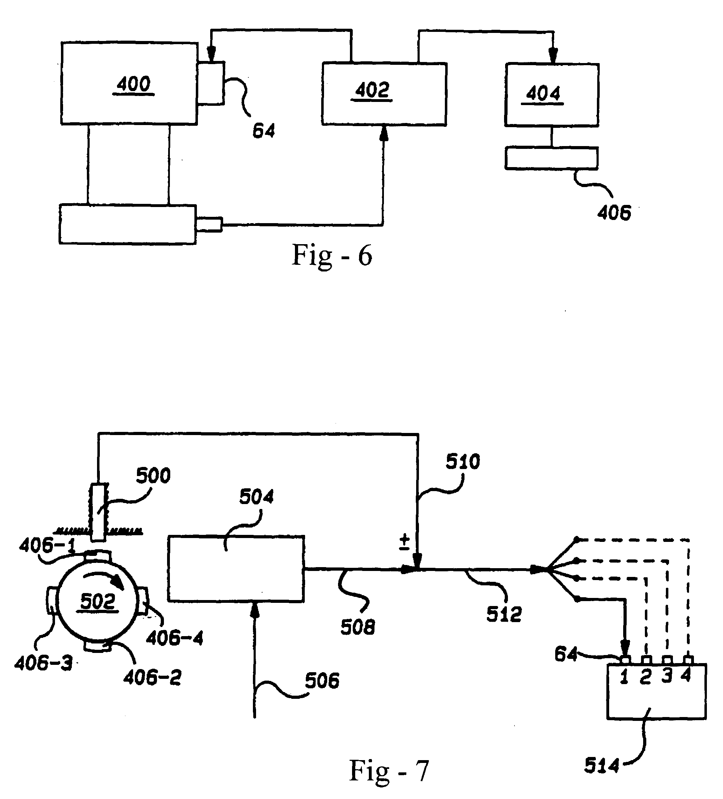

Figure 6 shows a diagram of a solenoid valve calibration system which includes the above described calibration device and individually calibrates at least each high pressure solenoid valve 64 to be used in the variable engine valve control system of this invention. The calibration device 400 is operated and controlled by an electronic controller 402 programmed to send out an initial standard solenoid control pulse, to receive and interpret the valve stroke signal, and to modify the duration of the control signal until the required valve stroke is achieved. when this is accomplished, the controller activates a printer 404 which prints and issues a tag 406 with the solenoid valve correction number ex-pressed in the form of a binary bar code. The tag 406 can be glued or otherwise attached to the solenoid valve. When each solenoid valve 64 is installed on the engine, its tag is detached from it and glued or otherwise attached to a rotatable member as described below which rotates with half the crankshaft speed during engine operation (in case of a two-stroke engine, this would be equal to crankshaft speed). The location of each tag on the rotating member depends on which cylinder its solenoid valve is installed.

As shown diagrammatically in Figure 7, a sensor is installed in proximity of a rotating member 502 and reads the bar code on each tag 406 as it passes by the sensor and sends this information to the engine electronic control system 504. The relative location of all the tags 406 on the rotating member is such that the engine control system successively receives information encoded in each tag just before its solenoid is to be actuated. The duration of the basic control signal computed for all solenoid valves controlling all engine intake (or exhaust) valves is determined by the control system as a function of engine operating parameters designated generally as input line 506, such as speed, load, etc. and is common to all intake (or exhaust) valves. The basic signal 508 is modified by addition or subtraction of the most recently received value of correction signal 510 and the corrected signal 512 is then relayed to the appropriate control solenoid valve 64, for example at cylinder No. 1 of engine 514 as shown, for that particular engine valve operation. Thus, tag 406-1 corrects the solenoid valve 64 at cylinder No. 1, as does tag 406-2 at cylinder 2, and so on. Therefore, each solenoid valve receives its own individualised corrected control signal which compensates for solenoid-to-solenoid differences and assures that at a given value of the basic control signal all engine intake (or exhaust) valves will perform in an identical manner.

The above described method of determining correction required for individual solenoid valves is not limited to any particular system but is fully applicable to a variety of other systems. In each case the tested solenoid valve is installed in a calibration device representing a variably controlled single engine valve and run with a predetermined pulse which is subsequently modified until the required standard pattern of valve motion is achieved. The method is applicable to the lost motion system and numerous other systems.

## Claims

1. An engine valve control system of an internal combustion engine in which the valve stroke is controlled by varying timing and duration of electric signals sent to individually dedicated engine valve controlling means, the system comprising:
a controller programmed to send variable electric control signals (512) to the said engine valve controlling means (64),said control signals duration comprising the algebraic sum of a basic signal duration (508) and a correction signal duration (510)
means (504) for generating a basic signal duration determined by the controller as a function of engine operating conditions and being equal for all engine intake valves and equal for all engine exhaust valves; and
means (500,502) for generating a correction signal predetermined for each of the engine valve controlling means as a measure of the extent the performance of each engine valve controlling means varies from a predetermined standard, said correction signal generating means being operative in timed sequence to supply to the controller said predetermined correction signal just prior to a respective engine valve controlling means being activated,
said correction signal generating means (500,502) comprising:
a rotatable member (502) having individual codings (406) thereon in spaced sequence, each coding representing a specific engine valve controlling means and containing information on the correction signal required by the said specific engine valve controlling means; and
a sensor (500) installed in proximity of the said rotatable member, said sensor being capable of reading the information contained in each coding on the rotatable member as it passes the sensor and transmitting said reading as a correction signal to said controller.

2. A system as claimed in claim 1, wherein each said coding is in the form of a tag (406-1 to 406-4) and each tag is affixed to said rotatable member (502); the system further including:
means for rotating said rotatable member (502) during engine operation with an angular velocity equal to half the crankshaft velocity on a four-stroke engine and equal to crankshaft velocity on a two-stroke engine, whereby said sensor (500) will read the information on individual tags (406) successively passing the proximity of the sensor (500) and transmit a respective correction signal to the controller, the location of individual tags on said rotatable member being such that the information on each tag (406) is read and sent to the control system just before the engine valve controlling means for which the tag was coded must be actuated.

3. A system as claimed in claim 1 or 2, including:
a high pressure source of fluid (40) and a low pressure source of fluid (42);
a cylinder head member (12) adapted to be affixed to the engine and including a plurality of enclosed cavities (30); a plurality of poppet valves (10), each being associated with a respective one of said plurality of enclosed cavities (30);
each said poppet valve (10) being shiftable between a first and second position within said cylinder head member (12);
a hydraulic actuator (26,30) including a piston (26) coupled to each said poppet valve (10) and reciprocable within the respective enclosed cavity (30) which thereby varies in displacement as each poppet valve moves;
said cylinder head member (12) having a high pressure port extending between the enclosed cavities and the high pressure source of fluid (40) and a low pressure port extending between the enclosed cavities and the low pressure source of fluid (42);
a high pressure valve (64) and a low pressure valve (68) for respectively regulating the flow of fluid in the high pressure and the low pressure ports of each of said plurality of enclosed cavities (30);
control means co-operating with the high and low pressure valves for selectively coupling the enclosed cavities to the high pressure and low pressure sources to oscillate each poppet valve in timed relation to engine operation, wherein the net fluid flow between the high pressure and low pressure sources is substantially less than the volume swept by the piston;
said control means including means for controlling (i) the motion of each said poppet valve (10) by varying the timing and duration of the said control means actuation, (ii) the timing of the valve opening and closing motions of each poppet valve by varying the timing of said control means actuation, and (iii) the stroke of each said poppet valve by varying the duration of said control means actuation; and
means for varying the pressure of the pressurised fluid whereby the acceleration, velocity and travel time of each poppet valve may also be controlled.

4. A system as claimed in claim 3, wherein said control means includes said individual engine valve controlling means (64) for each said poppet valve (10), whereby the duration of the control signal (512) may be individually adjusted for each engine valve controlling means (64) in all cylinders so as to assure equal poppet valve strokes in all cylinders.

## Patentansprüche

1. Ein Motorventilsteuersystem eines Verbrennungsmotors, in dem der Ventilhub durch die Veränderung der Synchronisation und der Dauer elektrischer Signale geregelt wird, die zu einer individuell zugewiesenen Motorventilsteuervorrichtung gesendet werden, wobei das System umfaßt:
Einen Regler, der programmiert ist, variable elektrische Steuersignale (512) an diese Motorventilsteuervorrichtung (64) zu senden, wobei diese Steuersignaldauern die algebraische Summe einer Basissignaldauer (508) und einer Korrektursignaldauer (510) umfassen;
eine Vorrichtung (504) zur Erzeugung einer Basissignaldauer, die vom Regler als Funktion von Motorbetriebszuständen bestimmt wird und die für alle Motoreinlaßventile gleich ist und für alle Motorauslaßventile gleich ist; und
eine Vorrichtung (500, 502) zur Erzeugung eines Korrektursignals, das für jede der Motorventilsteuervorrichtungen vorgegeben ist als Maß dafür, wie stark die Leistung jeder Motorventilsteuervorrichtung von einem vorgegebenen Standard abweicht, wobei diese Vorrichtung zur Erzeugung des Korrektursignals in zeitlich abgestimmter Folge betrieben wird, um dem Regler dieses vorgegebene Korrektursignal zu senden, gerade bevor eine entsprechende Motorventilsteuervorrichtung aktiviert wird,
wobei diese Vorrichtung (500, 502) zur Erzeugung eines Korrektursignals umfaßt:
Ein rotierendes Bauteil (502) mit individuellen Codierungen (406), die aufeinanderfolgend in einem Abstand voneinander darauf angebracht sind, wobei jeder Code eine spezielle Motorventilsteuervorrichtung darstellt und Information über das Korrektursignal enthält, das von der jeweiligen Motorventilsteuervorrichtung benötigt wird; und
einen Sensor (500), der nahe dieses rotierenden Bauteils angebracht ist, wobei dieser Sensor in der Lage ist, die in jeder Codierung auf dem rotierenden Bauteil enthaltene Information zu lesen, während es am Sensor vorbeiläuft, und diese Ablesung als Korrektursignal an diesen Regler zu übertragen.

2. Ein System nach Anspruch 1, worin jede dieser Codierungen die Form einer Marke (406-1 bis 406-4) besitzt und jede Marke an diesem rotierenden Bauteil (502) angebracht ist, wobei das System ferner umfaßt:
Eine Vorrichtung, um dieses drehbare Bauteil (502) während des Motorbetriebs mit einer Winkelgeschwindigkeit drehen zu lassen, die bei einem Viertaktmotor gleich der halben Kurbelwellengeschwindigkeit und bei einem Zweitaktmotor gleich der Kurbelwellengeschwindigkeit ist, wodurch dieser Sensor (500) die Information auf den einzelnen Marken (406) liest, die nacheinander am Sensor (500) vorbeilaufen, und ein entsprechendes Korrektursignal an den Regler überträgt, wobei die Position der einzelnen Marken auf diesem drehbaren Bauteil so ist, daß die Information auf jeder Marke (406) gelesen und an das Steuersystem übertragen wird, gerade bevor die Motorventilsteuervorrichtung, für die die Marke codiert wurde, betätigt werden muß.

3. Ein System nach Anspruch 1 oder 2, umfassend:
Eine Hochdruckfluidumquelle (40) und eine Niederdruckfluidumquelle (42);
ein Zylinderkopfbauteil (12), das angepaßt ist, am Motor befestigt zu werden, und das eine Vielzahl abgeschlossener Hohlräume (30) umfaßt; eine Vielzahl von Tellerventilen (10), die einzeln jeweils einem entsprechenden aus dieser Vielzahl von abgeschlossenen Hohlräumen (30) zugeordnet sind;
wobei jedes dieser Tellerventile (10) zwischen einer ersten und zweiten Stellung innerhalb dieses Zylinderkopfbauteils (12) verschiebbar ist;
ein hydraulisches Stellglied (26, 30), umfassend einen Kolben (26), der mit jedem dieser Tellerventile verbunden ist und der sich innerhalb des jeweiligen abgeschlossenen Hohlraumes (30) hin- und herbewegen kann, wodurch sich seine Verdrängung bei der Bewegung des Tellerventils verändert;
wobei dieses Zylinderkopfbauteil (12) eine Hochdrucköffnung aufweist, die sich zwischen den abgeschlossenen Hohlräumen und der Hochdruckfluidumquelle (40) befindet, und eine Niederdrucköffnung, die sich zwischen den abgeschlossenen Hohlräumen und der Niederdruckfluidumquelle (42) befindet;
ein Hochdruckventil (64) und ein Niederdruckventil (68), um den Fluidumstrom jeweils in der Hochdruck- und Niederdrucköffnung jeder dieser Vielzahl von abgeschlossenen Hohlräumen (30) zu steuern;
eine Regelvorrichtung, die mit dem Hoch- und dem Niederdruckventil zusammenwirkt, um die abgeschlossenen Hohlräume selektiv mit der Hochdruck- und der Niederdruckquelle zu verbinden, um jedes Tellerventil mit dem Motorbetrieb synchronisiert schwingen zu lassen, worin der Nettofluidumstrom zwischen der Hochdruck- und der Niederdruckquelle wesentlich geringer als das vom Kolben verdrängte Volumen ist;
wobei diese Regelvorrichtung eine Vorrichtung umfaßt zur Steuerung (i) der Bewegung jedes dieser Tellerventile (10), indem Synchronisation und Dauer der Betätigung dieser Regelvorrichtung verändert werden, (ii) der Synchronisation der Ventilöffnungsbewegungen und Ventilschließbewegungen jedes dieser Tellerventile, indem die Synchronisation der Betätigung dieser Regelvorrichtung verändert wird, sowie (iii) des Hubs jedes dieser Tellerventile, indem die Dauer der Betätigung dieser Regelvorrichtung verändert wird; und
eine Vorrichtung zur Veränderung des Drucks des unter Druck befindlichen Fluidums, wodurch die Beschleunigung, die Geschwindigkeit und die Hubzeit jedes dieser Tellerventile ebenfalls geregelt werden kann.

4. Ein System nach Anspruch 3, worin diese Regelvorrichtung diese individuelle Motorventilsteuervorrichtung (64) für jedes dieser Tellerventile (10) umfaßt, wodurch die Dauer des Regelsignals (512) individuell für jede der Motorventilsteuervorrichtungen (64) in allen Zylindern eingestellt werden kann, um so in allen Zylindern einen gleichen Hub der Tellerventile zu gewährleisten.

## Revendications

1. Système de commande de soupapes de moteur d'un moteur à combustion interne dans lequel la course des soupapes est commandée en faisant varier le cadencement et la durée de signaux électriques transmis à des moyens de commande de soupape de moteur individuellement spécialisés, le système comprenant :
un contrôleur programmé pour transmettre des signaux de commande électriques variables (512) auxdits moyens de commande de soupapes de moteur (64), ladite durée desdits signaux de commandes étant constituée de la somme algébrique d'une durée de signal de base (508) et d'une durée de signal de correction (510)
un moyen (504) destiné à la génération d'une durée de signal de base déterminée par le contrôleur, en fonction des conditions de fonctionnement du moteur et qui est égale pour toutes les soupapes d'admission du moteur et égale pour toutes les soupapes d'échappement du moteur, et
un moyen (500, 502) destiné à générer un signal de correction prédéterminé pour chacun des moyens de commande de soupapes de moteur en tant que mesure de l'écart des performances de chaque moyen de commande de soupape de moteur par rapport à un standard prédéterminé, ledit moyen de génération de signal de correction fonctionnant en séquence cadencée dans le temps afin d'appliquer au contrôleur ledit signal de correction prédéterminé juste avant qu'un moyen de commande de soupape respectif ne soit activé,
ledit moyen de génération de signal de correction (500, 502) comprenant :
un élément pouvant tourner (502) comportant des codages individuels (406) sur celui-ci en séquence espacée, chaque codage représentant un moyen de commande de soupape de moteur particulier et contenant des informations concernant le signal de correction requis par ledit moyen de commande de soupape de moteur particulier, et
un capteur (500) installé à proximité dudit élément pouvant tourner, ledit capteur pouvant lire les informations contenues dans chaque codage sur l'élément pouvant tourner lorsqu'il passe devant le capteur, et transmettre ladite lecture en tant que signal de correction audit contrôleur.

2. Système selon la revendication 1, dans lequel chacun desdits codages se présente sous la forme d'une étiquette (406-1 à 406-4) et chaque étiquette est fixée audit élément pouvant tourner (502), le système comprenant en outre :
un moyen destiné à mettre en rotation ledit élément pouvant tourner (502) pendant le fonctionnement du moteur, avec une vitesse angulaire égale à la moitié de la vitesse du vilebrequin dans un moteur à quatre temps, et égale à la vitesse du vilebrequin dans un moteur à deux temps, d'où il résulte que ledit capteur (500) lit les informations sur les étiquettes individuelles (406) passant successivement à proximité du capteur (500) et transmet un signal de correction respectif au contrôleur, l'emplacement des étiquettes individuelles sur ledit élément pouvant tourner étant tel que les informations sur chaque étiquette (406) sont lues et transmises au système de commande juste avant que le moyen de commande de soupape de moteur pour lequel l'étiquette a été codée doive être actionné.

3. Système selon la revendication 1 ou 2, comprenant :
une source de fluide à haute pression (40) et une source de fluide à basse pression (42),
un élément de tête de cylindre (12) adapté pour être fixé au moteur et comprenant une pluralité de cavités fermées (30), une pluralité de soupapes en champignon (10), chacune étant associée à une cavité respective parmi ladite pluralité de cavités fermées (30),
chacune desdites soupapes en champignon (10) pouvant être décalée entre une première et une seconde position à l'intérieur dudit élément de tête de cylindre (12),
un actionneur hydraulique (26, 30) comprenant un piston (26) couplé à chacune desdites soupapes en champignon (10) et pouvant subir un mouvement de va et vient à l'intérieur de la cavité fermée respective (30) qui varie ainsi en capacité lorsque chaque soupape en champignon est en mouvement,
ledit élément de tête de cylindre (12) comportant un accès à haute pression s'étendant entre les cavités fermées et la source de fluide à haute pression (40) et un accès à basse pression s'étendant entre les cavités fermées et la source de fluide à basse pression (42),
une vanne à haute pression (64) et une vanne à basse pression (68) destinées à réguler respectivement la circulation du fluide dans les accès à haute pression et à basse pression de chacune de ladite pluralité de cavités fermées (30),
un moyen de commande coopérant avec les vannes haute et basse pression afin de coupler sélectivement les cavités fermées aux sources haute pression et basse pression pour faire osciller chaque soupape en champignon en relation synchronisée avec le fonctionnement du moteur, dans lequel la circulation de fluide résultante entre les sources haute pression et basse pression est très inférieure au volume balayé par le piston,
ledit moyen de commande comprenant un moyen destiné à commander (i) le mouvement de chaque dite soupape en champignon (10) en faisant varier le cadencement et la durée de l'actionnement dudit moyen de commande, (ii) le cadencement des mouvements d'ouverture et de fermeture de soupape de chaque soupape en champignon en faisant varier le cadencement de l'actionnement dudit moyen de commande, et (iii) la course de chaque dite soupape en champignon en faisant varier la durée de l'actionnement dudit moyen de commande, et
un moyen destiné à faire varier la pression du fluide sous pression d'où il résulte que l'accélération, la vitesse et le temps de déplacement de chaque soupape en champignon peuvent également être commandés.

4. Système selon la revendication 3, dans lequel ledit moyen de commande comprend ledit moyen de commande individuel de soupape de moteur (64) pour chaque dite soupape en champignon (10), d'où il résulte que la durée du signal de commande (512) peut être réglée individuellement pour chaque moyen de commande de soupape de moteur (64) dans tous les cylindres de façon à assurer des courses de soupapes en champignon égales dans tous les cylindres.
